# EUROPEAN PATENT APPLICATION

(11) **EP 0 898 431 A1**
(43) Date of publication of application: **24.02.1999**
(21) Application number: 97440068.1
(22) Date of filing: 18.08.1997
(51) Int. Cl.: H04Q 3/00

(54) **Telecommunication services without intelligent network**

(71) Applicant: ALCATEL, 75008 Paris (FR)
(72) Inventor: Wellmann, Hans, 70499 Stuttgart (DE)
(74) Representative: Schätzle, Albin, Dipl.-Phys.

(57) **Abstract**

Known methods and systems for providing telecommunication services to a user, like number portability, are based on Intelligent Networks, of which the installation is expensive and time-consuming. These networks can be avoided in case a mobile switch is coupled via a processor device to a first database corresponding with a first network like GSM and to a second database corresponding with a second network like DECT and/or INTERNET, whereby an unused area code could be used to direct a call to said mobile switch, and interrogation of said databases takes place via said processor device. This results in the possibility of immediate providing number portability and routing into any network against low costs and without using Intelligent Networks.

## Description

The invention relates to a method for providing telecommunication services to a user, like for example number portability.

Such a method is of common general knowledge and, in general, based on a so-called Intelligent Network (IN) comprising Service Control Points (SCP) and Service Switching Points (SSP).

The use of an Intelligent Network for said method is disadvantageous, inter alia, because of such a network requiring large investments, with the installation of said network being time-consuming and with said network being limited to public switched telephony without INTERNET being supported.

It is an object of the invention, inter alia, to provide a method as described in the preamble which can be installed immediately without large costs being involved, said method preferably showing more flexibility with respect to mediation between different (possibly all) types of networks.

Thereto, the method according to the invention is characterised in that the method comprises the steps of
- detecting at least a part of a telecommunication signal,
- transmitting at least a part of said telecommunication signal via a mobile switch to a processor device which is coupled to a plurality of databases, at least one database corresponding with a first network mainly, and at least one database corresponding with a second network mainly,
- transmitting at least a part of said telecommunication signal from said processor device to at least one database,
- transmitting destination information from at least one database to said processor device,
- amending said telecommunication signal with said destination information into an amended telecommunication signal in said processor device, and
- transmitting said amended telecommunication signal from said processor device via said mobile switch to either said first network or said second network in dependence of said destination information.

The step of detecting at least a part of a telecommunication signal for example corresponds to a detection of an unused area (or a dedicated) code of a telephone number, which detection could take place in (an exchange of) either a mobile network or a fixed network. In response to said detection at least a part of said telephone number (for example the remaining part) is transmitted via said mobile switch to said processor device which is coupled to a plurality of databases. At least one database corresponds with a first network mainly, like for example a so-called Home Location Register (HLR) corresponding with a GSM network, and at least one database corresponds with a second network mainly, like for example a Digital European Cordless Telephone (DECT) database corresponding with a DECT network. At least a part of said telephone number (for example said remaining part) is then transmitted from said processor device to at least one database, in response to which said destination information is transmitted from at least one database to said processor device, which amends said telephone number with said destination information into an amended telephone number, and transmits said amended telephone number signal via said mobile switch to either said first network or said second network in dependence of said destination information.

As a result of this, number portability can be introduced without using Intelligent Networks. For example in a large European country comprising over 3000 exchanges for fixed telecommunication and about 40 exchanges for a nationwide mobile telecommunication network, the method according to the invention is very efficient.

The method according to the invention thus solves the problem, inter alia, of avoiding an expensive and time-consuming installation, without imposing restrictions for certain interfaces.

The invention is based on the insight, inter alia, that a telecommunication service like number portability can only be realised via an exchange, which exchange either deals with mobile telecommunication or deals with fixed telecommunication.

Further according to said method all data is left in the original databases, and said data is only relayed and converted when necessary, on demand. Compared to an Intelligent Network, which only operates well in case a SCP comprises a database including for example all number translations, said method according to the invention is further advantageous.

A first embodiment of the method according to the invention is characterised in that the two steps of transmitting at least a part of said telecommunication signal from said processor device to at least one of said databases and of transmitting destination information from at least one of said databases to said processor device comprise the steps of
- detecting at least a part of said telecommunication signal,
- in response to said detecting transmitting at least a part of said telecommunication signal from said processor device to one database, and
- transmitting destination information from said one database to said processor device.

According to this first embodiment, inside said processor device one of said databases is selected as the one that should be interrogated. In this case communication between said processor device and said databases is most efficient, with said processor device however being more complicated.

A second embodiment of the method according to the invention is, characterised in that the steps of transmitting at least a part of said telecommunication signal from said processor device to at least one of said databases and of transmitting destination information from at least one of said databases to said processor device comprise the steps of
- transmitting at least a part of said telecommunication signal from said processor device to each one of said databases, and
- transmitting destination information from one of said databases to said processor device.

According to this second embodiment, each one of said databases is selected as the one that should be interrogated. In this case communication between said processor device and said databases is less efficient, with said processor device however being less complicated.

The invention further relates to a telecommunication system for providing telecommunication services to a user and comprising at least a mobile switch and databases.

The telecommunication according to the invention is characterised in that the telecommunication system comprises a processor device being provided with
- a first in/output coupled to said mobile switch for receiving at least a part of a telecommunication signal from said mobile switch and for transmitting an amended telecommunication signal via said mobile switch to either a first network or a second network in dependence of a destination information,
- a second in/output coupled to a first database corresponding to said first network mainly,
- a third in/output coupled to a second database corresponding to said second network mainly, at least one of said databases receiving at least a part of said telecommunication signal from said processor device and transmitting said destination information to said processor device, and
- amending means for amending said telecommunication signal with said destination information into said amended telecommunication signal.

A first embodiment of the telecommunication system according to the invention is characterised in that the processor device comprises
- detecting means for detecting at least a part of said telecommunication signal, said processor device transmitting at least a part of said telecommunication signal to one database and receiving destination information from said one database.

A second embodiment of the telecommunication system according to the invention is characterised in that the processor device transmits at least a part of said telecommunication signal to each one of said databases and receives destination information from one of said databases.

A third embodiment of the telecommunication system according to the invention is characterised in that at least one of said databases is an INTERNET database.

The invention yet further relates to a processor device for use in a telecommunication system comprising at least a mobile switch and databases for providing telecommunication services to a user.

The processor device according to the invention is characterised in that the processor device is provided with
- a first in/output to be coupled to said mobile switch for receiving at least a part of a telecommunication signal from said mobile switch and for transmitting an amended telecommunication signal via said mobile switch to either a first network or a second network in dependence of a destination information,
- a second in/output to be coupled to a first database corresponding with said first network mainly,
- a third in/output to be coupled to a second database corresponding with said second network mainly, at least one of said databases receiving at least a part of said telecommunication signal from said processor device and transmitting said destination information to said processor device, and
- amending means for amending said telecommunication signal with said destination information into said amended telecommunication signal.

A first embodiment of the processor device according to the invention is characterised in that the processor device comprises
- detecting means for detecting at least a part of said telecommunication signal, said processor device transmitting at least a part of said telecommunication signal to one database and receiving destination information from said one database.

A second embodiment of the processor device according to the invention is characterised in that the processor device transmits at least a part of said telecommunication signal to each one of said databases and receives destination information from one of said databases.

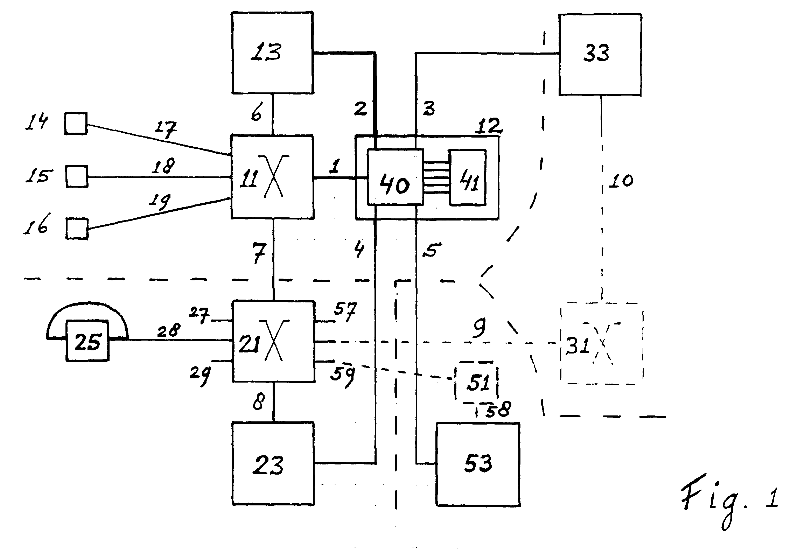

The invention will be explained in greater detail at the hand of an embodiment disclosed in the drawing, whereby
figure 1 discloses a telecommunication system according to the invention comprising a processor device according to the invention.

The telecommunication system according to the invention disclosed in figure 1 is divided into four parts: a first mobile network like for example the GSM network comprising a mobile switch 11, a processor device 12 according to the invention and a first database 13 for example being a Home Location Register or HLR, a second mobile network like for example a DECT network comprising a switch 31 and a second database 33 for example being a DECT database, a fixed network like for example being a Public Switched Telephone Network (PSTN) comprising an exchange 21 and a third database 23, and an INTERNET network comprising an INTERNET access node 51 and a fourth database 53 for example being an INTERNET database.

Exchange 21 is coupled to a telephone 25 via a connection 28 and is coupled to other telephones and/or other exchanges not shown in figure 1 via connections 27 and 29. Exchange 21 is coupled to third database 23 via a connection 8 and to switch 31 via a connection 9 and to mobile switch 11 via a connection 7 and to access node 51 via a connection 59 and to further access nodes and/or switches not shown in figure 1 via a connection 57. Switch 31 is coupled to second database 33 via a connection 10, and access node 51 is coupled to fourth database 53 via a connection 58.

Mobile switch 11 is coupled to a first Base Station Controller (BSC) 14 via a connection 17, to a second Base Station Controller (BSC) 15 via a connection 18, and to a third Base Station Controller (BSC) 16 via a connection 19. Mobile switch 11 is coupled to database 13 via a connection 6, and to a first in/output of processor device 12 via a connection 1. A second in/output of processor device 12 is coupled to first database 13 via a connection 2, a third in/output of processor device 12 is coupled to second database 33 via a connection 3, a fourth in/output of processor device 12 is coupled to third database 23 via a connection 4, and a fifth in/output of processor device 12 is coupled to fourth database 53 via a connection 5, and a sixth in/output not shown in figure 1 of processor 12 is coupled to a further database not shown in figure 1. Processor device 12 comprises coupling means 40 for mutually coupling/decoupling said in/outputs and control means 41 for controlling said coupling means 40 and for detecting and/or amending signals entering processor device 12.

The telecommunication system as shown in figure 1 functions as follows. A subscriber using telephone 25 and trying to reach a certain user dials a certain telephone number defining said certain user and for example having an unused area code as a prefix. A corresponding telecommunication signal is then transmitted via connection 28 to exchange 21, which detects said unused area code and in response thereto transmits for example the entire telecommunication signal via connection 7 to mobile switch 11, which detects said unused area code and in response thereto transmits for example the remaining part of the telecommunication signal via connection 1 and via the first in/output to processor device 12.

According to a first embodiment, inside processor device 12, control means 41 control coupling means 40 in such a way that said part of said telecommunication signal is transmitted via coupling means 40 to control means 41, which then detect said part of said telecommunication signal, for example by using a so-called routing table and/or by comparing it with previously stored signals. In response to said detecting, one of said databases 13,33,23,53 is selected as the one which should comprise certain destination information with respect to said certain user, and said part or an other part of said telecommunication signal is transmitted via an in/output to the selected database, for example via the second in/output to database 13, because of said user being a GSM user. In response thereto, database 13 generates said destination information and transmits it via the second in/output to processor device 12. Inside processor device 12, control means 41 control coupling means 40 in such a way that said destination information is transmitted via coupling means 40 to control means 41, which comprise amending means for amending said telecommunication signal with said destination information into an amended telecommunication signal. Said amending means could be realised by using software (possibly in combination with converters) or by using hardware only (like shift registers etc.) or by using a combination of software and hardware. The amended telecommunication signal is then transmitted via coupling means 40 and the first in/output and connection 1 to mobile switch 11, which in response thereto will contact said GSM user via at least one of said connections 17-19 and at least one of said Base Station Controllers 14-16.

According to a second embodiment, inside processor device 12, control means 41 control coupling means 40 in such a way, for example, that said part or an other part of said telecommunication signal is transmitted via coupling means 40 and via the second in/output and via connection 2 to database 13 and is transmitted via coupling means 40 and via the third in/output and via connection 3 to database 33 (and is possibly transmitted via coupling means 40 and via the fifth in/output and via connection 5 to database 53). Then usually one of said databases 13,33(,53) will send back said certain destination information with respect to said certain user, for example database 33, because of said user being a DECT user. In response thereto, said destination information arrives via the third in/output at processor device 12. Inside processor device 12, control means 41 control coupling means 40 in such a way that said destination information is transmitted via coupling means 40 to control means 41, which comprise amending means for amending said telecommunication signal with said destination information into an amended telecommunication signal. The amended telecommunication signal is then transmitted via coupling means 40 and the first in/output and connection 1 to mobile switch 11, which in response thereto transmits said amended telecommunication signal via connection 7 and via exchange 21 and via connection 9 to switch 31 for contacting said DECT user.

According to a third (fourth) embodiment database 23 (53) will generate and transmit said destination information via connection 4 (5) and via the fourth (fifth) in/output to processor device 12, after which said amended telecommunication is then transmitted via coupling means 40 and the first in/output and connection 1 to mobile switch 11, which in response thereto transmits said amended telecommunication signal via connection 7 and to exchange 21 for contacting said user (via access node 51).

In view of the second and third (fourth) embodiment it could seem to be very inefficient to go from the fixed network (exchange 21) to the mobile network (mobile switch 11) for interrogation of databases and then to go back, in particular in case at least one of said databases to be interrogated does not belong to said mobile network, but this inefficiency pales into insignificance beside the advantage of having to install only one processor device per mobile switch, the number of mobile switches in general being much smaller than the number of fixed exchanges, and the costs of said number of processor devices being much lower than the costs of an Intelligent Network. Of course, in the future, when Intelligent Networks have been installed, it should not be excluded that said processor devices and one or more of (some of) the Service Control Points (SCP) are combined.

Said processor devices could also be combined with one or more (mobile) switches, and/or one or more exchanges, and/or one or more databases. Such an integration would offer the advantage, inter alia, of saving connections and of a higher efficiency. However, the core of the invention remains the providing of services via a mobile switch, independently of said services belonging to a fixed network or other mobile networks or a network like INTERNET. Therefore, the term 'destination information' should get the broadest possible meaning and could for example be regarded to mean 'service information'. Said core also remains the same in case two or more different databases are integrated: such an integration in fact only increases the advantages of said invention.

With respect to said databases suddenly comprising two in/outputs instead of one in/output, it is observed that this is of common general knowledge to a person skilled in the art, who for example will install a multiplexing/demultiplexing function inside each database to get an extra in/output. In case a database is not to be amended or cannot be amended, said multiplexing/demultiplexing function could be installed outside said database. With respect to said processor devices and/or said databases, each term 'in/output' could for example be either a real in/output to be coupled to a bidirectional connection and for example using a so-called fork circuit, or a separate input and output, each one to be coupled to a unidirectional connection, etc.

Between said mobile switch and said processor device, as well as between said processor device and said databases, a conversion (from left to right) and a back-conversion (from right to left) should not be excluded. Conversion means for converting and back-converting could be installed in said mobile switch and/or in said processor device and/or in said databases. Therefore, for example each step of transmitting a signal and/or for example each step of transmitting information could comprise such a conversion. Such conversion means, inter alia, would further allow said processor device to be coupled to said databases via said switches/exchanges for interrogating a databases indirectly via a switch/exchange instead of interrogating it directly.

## Claims

1. Method for providing telecommunication services to a user, characterised in that the method comprises the steps of
- detecting at least a part of a telecommunication signal,
- transmitting at least a part of said telecommunication signal via a mobile switch to a processor device which is coupled to a plurality of databases, at least a first database corresponding with a first network mainly, and at least a second database corresponding with a second network mainly,
- transmitting at least a part of said telecommunication signal from said processor device to at least one of said databases,
- transmitting destination information from at least one of said databases to said processor device,
- amending said telecommunication signal with said destination information into an amended telecommunication signal in said processor device, and
- transmitting said amended telecommunication signal from said processor device via said mobile switch to either said first network or said second network in dependence of said destination information.

2. Method according to claim 1, characterised in that the two steps of transmitting at least a part of said telecommunication signal from said processor device to at least one of said databases and of transmitting destination information from at least one of said databases to said processor device comprise the steps of
- detecting at least a part of said telecommunication signal,
- in response to said detecting transmitting at least a part of said telecommunication signal from said processor device to one database, and
- transmitting destination information from said one database to said processor device.

3. Method according to claim 1, characterised in that the steps of transmitting at least a part of said telecommunication signal from said processor device to at least one of said databases and of transmitting destination information from at least one of said databases to said processor device comprise the steps of
- transmitting at least a part of said telecommunication signal from said processor device to each one of said databases, and
- transmitting destination information from one of said databases to said processor device.

4. Telecommunication system for providing telecommunication services to a user and comprising at least a mobile switch and databases, characterised in that the telecommunication system comprises a processor device being provided with
- a first in/output coupled to said mobile switch for receiving at least a part of a telecommunication signal from said mobile switch and for transmitting an amended telecommunication signal via said mobile switch to either a first network or a second network in dependence of a destination information,
- a second in/output coupled to a first database corresponding to said first network mainly,
- a third in/output coupled to a second database corresponding to said second network mainly, at least one of said databases receiving at least a part of said telecommunication signal from said processor device and transmitting said destination information to said processor device, and
- amending means for amending said telecommunication signal with said destination information into said amended telecommunication signal.

5. Telecommunication system according to claim 4, characterised in that the processor device comprises
- detecting means for detecting at least a part of said telecommunication signal, said processor device transmitting at least a part of said telecommunication signal to one database and receiving destination information from said one database.

6. Telecommunication system according to claim 4, characterised in that the processor device transmits at least a part of said telecommunication signal to each one of said databases and receives destination information from one of said databases.

7. Telecommunication system according to claim 4, 5 or 6, characterised in that at least one of said databases is an INTERNET database.

8. Processor device for use in a telecommunication system comprising at least a mobile switch and databases for providing telecommunication services to a user, characterised in that the processor device is provided with
- a first in/output to be coupled to said mobile switch for receiving at least a part of a telecommunication signal from said mobile switch and for transmitting an amended telecommunication signal via said mobile switch to either a first network or a second network in dependence of a destination information,
- a second in/output to be coupled to a first database corresponding with said first network mainly,
- a third in/output to be coupled to a second database corresponding with said second network mainly, at least one of said databases receiving at least a part of said telecommunication signal from said processor device and transmitting said destination information to said processor device, and
- amending means for amending said telecommunication signal with said destination information into said amended telecommunication signal.

9. Processor device according to claim 8, characterised in that the processor device comprises
- detecting means for detecting at least a part of said telecommunication signal, said processor device transmitting at least a part of said telecommunication signal to one database and receiving destination information from said one database.

10. Processor device according to claim 8, characterised in that the processor device transmits at least a part of said telecommunication signal to each one of said databases and receives destination information from one of said databases.
